# EUROPÄISCHE PATENTANMELDUNG

(11) **EP 0 833 426 A2**
(43) Veröffentlichungstag der Anmeldung: **01.04.1998**
(21) Anmeldenummer: 97116301.9
(22) Anmeldetag: 18.09.1997
(51) Int. Cl.: H02J 13/00

(54) **Installationssystem**

(30) Priorität: 30.09.1996 DE 19640300
(71) Anmelder: SIEMENS AKTIENGESELLSCHAFT, 80333 München (DE)
(72) Erfinder: Zirkl, Siegmar, Dipl.-Ing., 93051 Regensburg (DE)

(57) **Zusammenfassung**

Die Erfindung bezieht sich auf ein Installationssystem (1), insbesondere für eine Hausinstallation, mit einem ein erstes Adernpaar (14a) und ein zweites Adernpaar (14b) aufweisenden Installationsbus (14) sowie mit einem Applikationsbaustein (10). Dieser umfaßt einen Kontaktanschluß (12) zur Spannungsversorgung und eine Anwenderschnittstelle (32) sowie einen Applikationsanschluß (16) für das zweite Adernpaar (14b), an das eine Anzahl von Installationsgeräten (18 bis 24) über jeweils einen Applikationsankoppler (26) anschließar ist. Das Installationssystem (1) kann mittels eines an den Applikationsbaustein (10) anschließbaren Steuerbaustein (30) von einer ersten in eine zweite Installationsebene und darüber hinaus mittels eines Busverbinders (38) zu einer dritten Installationsebene hochgerüstet werden. In der dritten Installationsebene ist dann eine Verknüpfung von programmierbaren Applikations-Funktionen mit Funktionen eines European-Installation-Bus (EIB) möglich.

## Beschreibung

Die Erfindung bezieht sich auf ein Installationssystem, insbesondere für eine Hausinstallation.

Ein Installationssystem z. B. im Hausbereich umfaßt ublicherweise ausgehend von einer mit elektrischen Sicherungen versehenen Verteilereinrichtung ein Kabel- oder Leitungssystem zur Verknüpfung einer Vielzahl von Schaltern oder Dimmern (Sensoren) mit einer weiteren Vielzahl von elektrischen Endgeräten (Aktoren), z. B. Leuchten o. dgl.. Ein solches Installationssystem ist allerdings besonders unflexibel hinsichtlich der Systemfunktionalität, zumal eine Zuordnungsänderung zwischen Sensoren und Aktoren sowie eine Nachrüstung zusätzlicher Sensoren und/oder Aktoren nur mit erheblichem Aufwand realisierbar ist. Darüber hinaus ist eine Einbindung eines solchen Installationssystems in das sogenannte European-Installation-Bus-System (instabus EIB) nicht möglich.

Der Erfindung liegt daher die Aufgabe zugrunde, ein besonders flexibles und in einfacher Weise aufrüstbares Installationssystem anzugeben. Dies soll, insbesondere als Untersystem, auch in einen 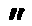 instabus EIB" integrierbar sein.

Diese Aufgabe wird erfindungsgemäß gelöst durch die Merkmale des Anspruchs 1. Vorteilhafte Ausgestaltungen und Weiterbildungen sind Gegenstand der Unteransprüche.

Die Erfindung geht dabei von der Überlegung aus, ein in einfacher und kostengünstiger Art und Weise in ein höheres oder übergeordnetes System, nämlich in das instabus EIB-System, integrierbares Installations-Untersystem zu schaffen, das im wesentlichen Grundfunktionen, wie z. B. Schalten (EIN/AUS), Dimmen (UP/DOWN) oder Jalousie (n WERTE), übernimmt.

Das Installationssystem umfaßt einen Installationsbus in Form zweier Adernpaare einer im European-Installation-Bus-System (EIB-System) genormten Busleitung, wobei das für die Spannungsversorgung (29V DC) vorgesehene zweite Adernpaar für eine räumliche und zahlenmäßige Applikations-Expansion (APX) von Grundfunktionen der Installationstechnik (Schalten, Dimmen, Jalousie) genutzt wird. Die Installation erfolgt zweckmäßigerweise in drei aufeinander aufbauenden Installationsebenen, die sich im wesentlichen hinsichtlich Komfort und Funktionalität unterscheiden. Dabei ist ein Hochrüsten von Ebene zu Ebene bis zu einer Ankopplung an den European-Installation-Bus (EIB) auch in diskreten Zwischenschritten innerhalb derselben Ebene möglich. Die steigende Wertigkeit von Ebene zu Ebene ergibt sich im wesentlichen durch eine Umorganisation von einem dezentralen zu einem zentralen System.

Wahrend die erste Ebene (level I) ein dezentrales 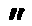 stand-alone" System mit direkter Adressierung eines APX-Sensors zu einem APX-Aktor bildet, bilden die zweite Ebene (level II) und die dritte Ebene (level III) jeweils ein zentrales System. Diese unterscheiden sich wiederum dadurch, daß die zweite Ebene ein zentrales 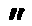 stand-alone" System ist, während die dritte Ebene ein zentrales Untersystem des European-Installation-Bus (EIB) ist.

Zentraler Baustein aller drei Ebenen ist ein Applikationsbaustein, an den das zweite Adernpaar des EIB-Installationsbuses als Applikationsbus zum Anschluß einer Anzahl von Installationsgeräten anschließbar ist. Der Applikationsbaustein ist mit einer die Spannungsversorgung führenden zweiten Datenschiene des Installationssystems verbunden und dient in der ersten Ebene lediglich zur Spannungsversorgung der Installationsgeräte. Die Adressierung der Installationsgeräte erfolgt daher auch unabhängig vom Applikationsbaustein, so daß in der ersten Ebene eine getrennte Gruppierung ohne Gruppenüberschneidung vorgesehen ist, z. B. für ein zentrales 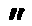 AUS". Bezüglich der Funktionalität innerhalb der ersten Ebene erfolgt daher eine starre Zuordnung nicht nur zwischen Sensoren und Aktoren, sondern auch innerhalb eines z. B. als Mehrfachschalter ausgebildeten Sensors.

Demgegenüber sind sowohl in der zweiten als auch in der dritten Ebene bezüglich der Funktionalität überschneidende Gruppierungen mit z. B. zentralem 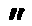 AUS" möglich. Zentraler Baustein in der zweiten und dritten Ebene ist ein Steuerbaustein mit einer Anwenderschnittstelle als Schaltzentrale, über den zentral die Adressierung der Sensoren und Aktoren möglich ist. Bei Mehrfachschaltern ist die Wertezuordnung von Sensortasten oder -wippen innerhalb z. B. acht festen Stufen frei wahlbar, wobei jeder Wippenhälfte auch eines Mehrfachschalters eine frei wählbare Funktion zugeordnet werden kann. Darüber hinaus kann bei einem Spannungsausfall der Status eines Aktors gespeichert werden. Die Adressierung und Programmierung der Sensoren und Aktoren erfolgt mittels eines an den Steuerbaustein anschließbaren Computers (PC).

Die dritte Ebene zeichnet sich hinsichtlich der Funktionalität durch eine Verknüpfung der programmierbaren Applikations- oder APX-Funktionen der zweiten Ebene mit EIB-Funktionen aus. Für den Datenaustausch vom und zum European-Installation-Bus ist zwischen den beiden Adernpaaren des Installationbuses ein Busverbinder vorgesehen. Wie auch in der zweiten Ebene sind in der dritten Ebene mehrfache Adressenverknüpfungen möglich, wobei innerhalb der dritten Ebene derartige Verknüpfungen über den Installationsbus auch zwischen APX- und den EIB-Komponenten möglich ist. Die erste und zweite Ebene können jeweils durch Hinzufügen von Komponenten und durch Umprogrammierung zur jeweils nächst höheren Ebene ausgebaut werden.

Der Applikationsbaustein erhalt seine Spannungsversorgung direkt von einer Datenschiene einer Verteilereinrichtung des Installationssystems. Bei Verwendung des EIB-Buskabels ist zweckmäßigerweise dessen zweites Adernpaar an einen am Applikationsbaustein oder Applikationsexpander (APX) vorgesehenen Applikationsanschluß angeschlossen und bildet den Applikationsbus für das oder jedes Installationsgerät. Der Applikationsbaustein enthalt einen Sender und einen Empfänger, die in der ersten Ebene nicht benötigt werden. Zur Aufbereitung der Spannungsversorgung enthalt der Applikationsbaustein außerdem einen Spannungswandler, der als Stromquellenschaltung ausgelegt ist. Um einen Kurzschluß einer im EIB-Bussystem üblicherweise vorgesehenen EIB-Drossel (zweite oder dritte Ebene) zu vermeiden, ist die Anwenderschnittstelle des Applikationsbausteins zweckmäßigerweise vom Applikationsanschluß galvanisch getrennt. Da in der ersten Ebene kein Steuerbaustein vorgesehen ist und somit keine Kommunikation an der Anwenderschnittstelle stattfindet, ist der Sender des Applikationsbausteins in der ersten Ebene automatisch hochohmig.

Der Applikationsankoppler jedes Installationsgerätes, d.h. jedes Sensors und jedes Aktors, umfaßt einen Mikroprozessor und zusätzlich zur Empfangsstufe eine Sendestufe. Der auch das Tastenfeld für die Sensoren und eine Aktor-Endstufe bedienende Mikroprozessor enthält zweckmäßigerweise eine Software für alle Installationsgeräte, d.h. für alle APX-Gerätetypen. Dadurch ist nur eine einzige Programmiermaske für das gesamte Installationssystem zu erstellen. Der Mikroprozessor weist vorzugsweise sowohl einen flüchtigen Speicher (RAM) als auch einen nicht-flüchtigen Speicher (EEPROM) zur Vermeidung eines Adressen- und Kodierverlustes bei einem Spannungsausfall auf.

Um auch eine Fernbedienbarkeit innerhalb des Installationssystems zu ermöglichen, ist mindestens ein mittels eines Infrarot- oder Funk-Senders ansteuerbarer Fernsteuer-Dekoder als Installationsgerät vorgesehen. Der oder jeder Dekoder arbeitet dabei vorteilhafterweise adressen- oder kommandotransparent, so daß dieser keine eigene Adresseneinstellung benötigt. Das Fernsteuersysstem kann uni- oder bidirektional ausgebildet sein, wobei adressentransparente Funk- oder Infrarotsensoren und/oder Funk- oder Infrarotaktoren am Installationsbus angeschlossen sein können. Diese sind dann von fest installierten oder mobilen Sender- bzw. Empfängergeräten ansteuerbar.

Ausführungsbeispiele der Erfindung werden anhand einer Zeichnung näher erläutert. Darin zeigen:
- FIG 1: ein Installationssystem einer ersten Ebene,
- FIG 2: ein Installationssystem gemäß FIG 1 in einer zweiten Ebene,
- FIG 3: ein Installationssystem gemmäß den FIG 1 und 2 in einer dritten Ebene,
- FIG 4: ein Blockschaltbild eines Applikationsbaustens,
- FIG 5: ein Schaltbild eines Applikationsankopplers eines Sensors oder Aktors und
- FIG 6: schematisch einen Kodierschalter zur Adressenzuordnung von Einfach- und Mehrfachsensoren zu einem Aktor.

Einander entsprechende Teile sind in allen Figuren mit den gleichen Bezugszeichen versehen.

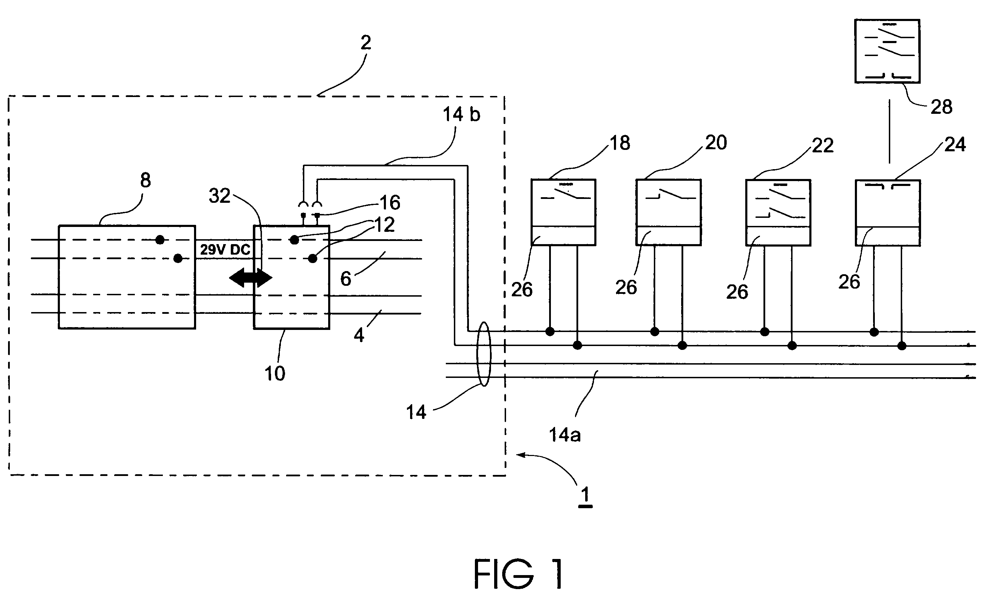

FIG 1 zeigt eine erste Installationsebene eines Installationssystems 1 mit in einer Verteilereinrichtung 2 einer ersten Datenschiene 4 und einer zweiten Datenschiene 6 sowie mit einer Spannungsversorgungseinrichtung 8 und mit einem Applikationsexpander (APX) oder Applikationsbaustein 10. Die Spannungsversorgungseinrichtung 8 und der Applikationsbaustein 10 sind jeweils mit der zweiten Datenschiene 6 kontaktiert. Die Datenschienen 4 und 6 sind Teil eines Installationsbuses (Instabus EIB). Die zweite Datenschiene 6 führt eine Gleichspannung Uₛ von 29V DC und dient zur Spannungsversorgung des Applikationsbausteins 10 über dessen Kontaktanschluß 12 zur Datenschiene 6.

Das Installationssysstem 1 umfaßt weiter eine Installationsbusleitung oder ein EIB-Buskabel 14 mit einem ersten Adernpaar 14a für den European-Installation-Bus (EIB) und einem zweiten Adernpaar 14b, das an einen Applikationsanschluß 16 des Applikationsbaustein 6 anschließbar ist. An das zweite Adernpaar 14b sind eine Anzahl von Installationsgeräten angeschlossen, von denen nur einige dargestellt sind. Dargestellt sind ein Sensor 18 und ein Aktor 20 sowie eine Sensor-Aktor-Kombination 22 und ein Fernsteuerdekoder 24. Jedes der Installationsgeräte 18 bis 24 weist einen Applikationsankoppler 26 zur Ankopplung an das zweite Adernpaar 14b des Installationsbuses 14 auf.

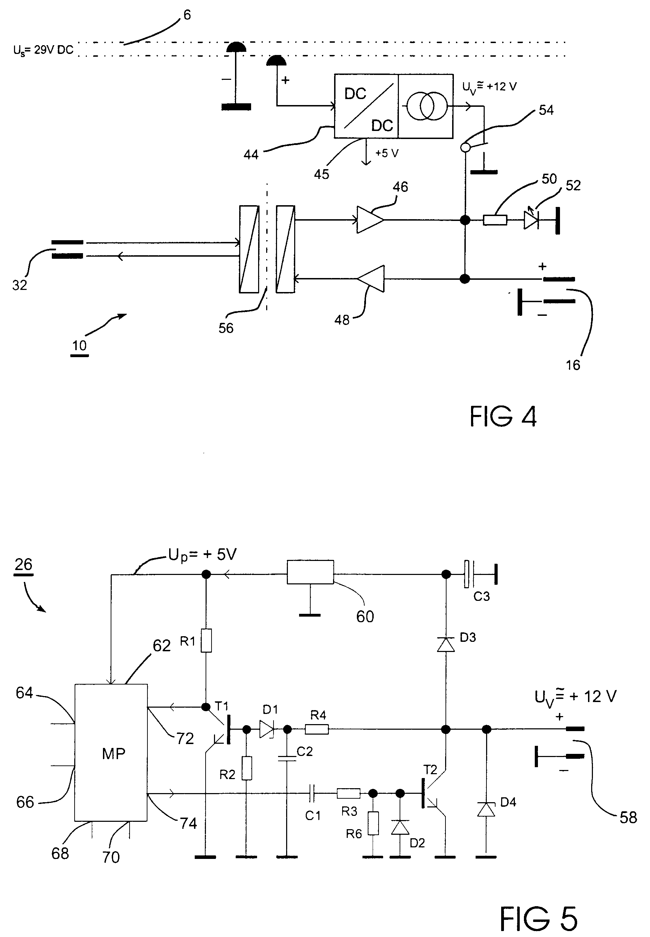

Das zweite Adernpaar 14b des Installationsbuses 14 bildet einen seriellen Daten- und Versorgungsbus für die Installationsgeräte 18 bis 24, wobei die Übertragung stets in Richtung vom Sensor 18 zum Aktor 20 stattfindet. Zur Datenübertragung für zu sendende Bit-Informationen wird das zweite Adernpaar 14b des Installationsbuses 14 jeweils kurzgeschlossen (FIG 4).

Bereits in der ersten Installationsebene kann ein eigenständiges Fernsteuersystem auf Hochfrequenz (HF)- und/oder Infrarot (IR)-Basis integriert sein. Dem Fernsteuer-Dekoder 24 ist dann ein mobiler oder stationärer Sender und/oder Empfänger 28 zugeordnet. Wahrend der Dekoder 24 vorzugsweise adressen- oder kommandotransparent arbeitet und demzufolge keine eigene Adresseneinstellung benötigt, werden die Adressen des Sensors 18 und des Aktors 20 sowie der Sensor-Aktor-Kombination 22 bei der Inbetriebnahme des Installationssystems 1 in der ersten Installationsebene fest eingestellt. Der oder jeder Sensor 18 kann ein Ein- oder Mehrfachsensor sein, der in bekannter Weise auf- oder unterputz installiert ist. Ebenso kann der oder jeder Aktor 20 und die oder jede Sensor-Aktor-Kombination 22 ein- oder mehrfach ausgeführt und auf- oder unterputz installiert sein.

Die Funktionalität der ersten Installationsebene entspricht im wesentlichen einem herkömmlichen Installationssystem mit u. a. dem Unterschied, daß nach erfolgter Montage die Zuordnung eines Sensors 18 zu einem Aktor 20, z. B. eines Schalters zu einem Endgerät, bei der Inbetriebnahme frei wählbar festgelegt werden kann. Auch kann der Sensor 18 zur Steuerung mehrerer Aktoren 20,22 verwendet werden, wobei lediglich eine entsprechende Adressierung des Sensors 18 und der entsprechenden Aktoren 20,22 bei der Inbetriebnahme erforderlich ist.

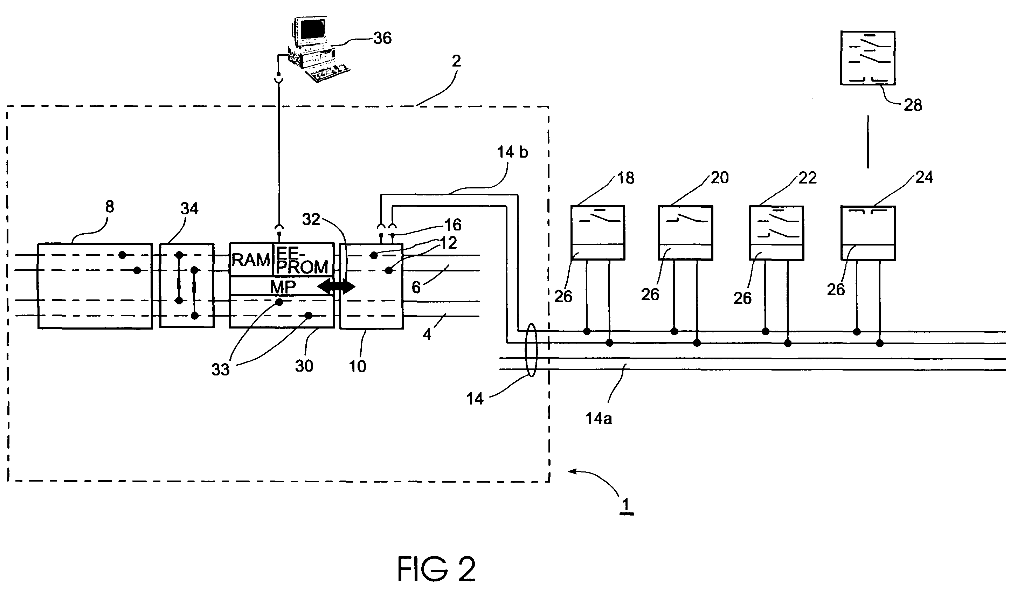

Das Installationssystem gemäß FIG 1 kann hochgerüstet werden auf das Installationssystem 1 gemäß FIG 2, das eine zweite Installationsebene darstellt. In der zweiten Installationsebene - die im wesentlichen der ersten Installationsebene entspricht - ist in der Verteilereinrichtung 2 zusätzlich ein Steuerbaustein 30 vorgesehen, der über eine Anwenderschnittstelle 32 mit dem Applikationsbaustein 10 verbunden ist. Der Steuerbaustein 30 enthält einen Mikroprozessor (MP) sowie damit verbunden einen flüchtigen Speicher (RAM) und einen nicht-flüchtigen Speicher (EEPROM). Der Steuerbaustein 30 ist über einen EIB-Anschluß oder EIB-Busankoppler 33 an der ersten Datenschiene 4 kontaktiert.

Bei der Installation werden der Steuerbaustein 30 und der Applikationsbaustein 10 an der Anwenderschnittstelle 32 zusammengeführt und anschließend gemeinsam auf die Datenschienen 4 und 6 aufgesteckt und dabei kontaktiert. Dabei kann der Steuerbaustein 30 bereits in der zweiten Installationsebene mit der Datenschiene 4 kontaktiert sein. Auch kann bereits in der zweiten Installationsebene eine im European-Installation-Bus (EIB) üblicherweise vorgesehene EIB-Drossel 34 installiert sein.

Im Gegensatz zur ersten Installationsebene, in der ein direkte Adressierung vom Sensor 18, 22 zum Aktor 20, 22 erfolgt, erfolgt in der zweiten Installationsebene die Adressierung der Installationsgeräte 18 bis 24 zentral über den Steuerbaustein 30, an den dazu für die entsprechende Programmierung ein Computer 36 anschließbar ist. Zur Programmierung kann auch in nicht näher dargestellter Art und Weise ein separater Baustein vorgesehen sein, an den dann der Computer 36 anschließbar ist. Bereits in der zweiten Installationsebene sind beliebige Adressenverknüpfungen möglich, wobei die Adressierung der Installationsgeräte 18 bis 24 über das zweite Adernpaar 14b des Buskabels 14 erfolgt.

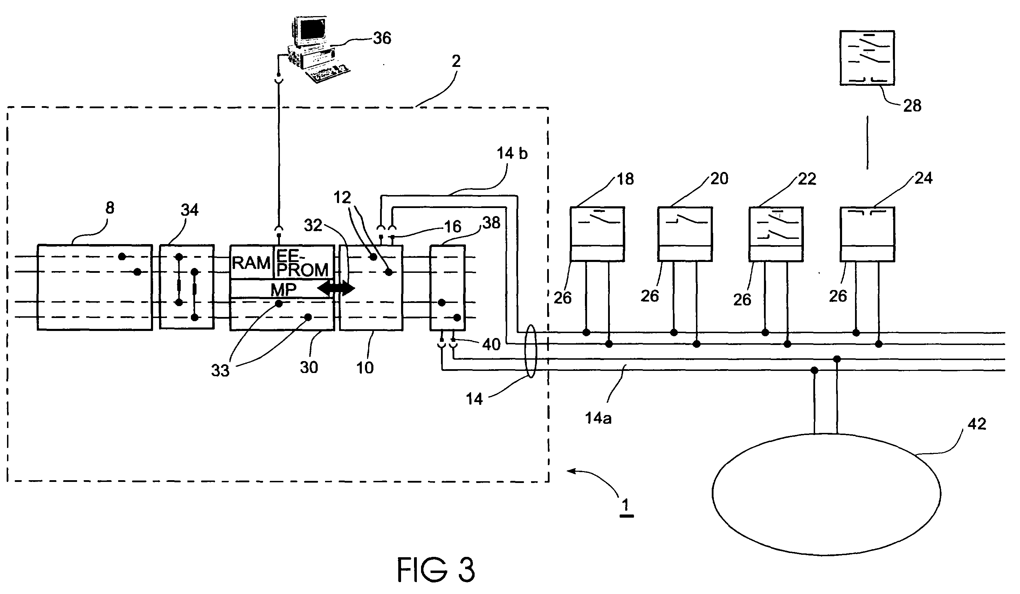

Das Installationssystem gemäß FIG 2 kann wiederum hochgerüstet werden auf das Installationssystem 1 gemäß FIG 3, das eine dritte Installationsebene darstellt. Diese unterscheidet sich von der zweiten Installationsebene gemäß FIG 2 durch die Einfügung eines Busverbinders 38, der in der Verteilereinrichtung 2 auf die Datenschienen 4 und 6 aufgesetzt wird. Der Busverbinder 38 weist Anschlüsse 40 für das erste Adernpaar 14a des Buskabels 14 auf. In der dritten Installationsebene ist somit zusätzlich eine Verknüpfung von programmierten Applikationsfunktionen gemäß der zweiten Installationsebene mit Funktionen von allen EIB-Anwendungen 42 möglich.

FIG 4 zeigt ein Blockschaltbild des Applikationsbausteins 10, der in allen Installationsebenen vorgesehen ist. Der Applikationsbaustein 10 erhält seine Spannungsversorgung direkt von der zweiten Datenschiene 6. Zur Aufbereitung der Gesamtspannungsversorgung umfaßt der Applikationsbaustein 10 einen Step-down-DC/DC-Spannungswandler 44, der als Stromquellenschaltung ausgelegt ist. Dieser regelt die von der Spannungsversorgungseinrichtung gelieferte Spannung Uₛ = 29V auf eine Spannung Uᵥ von etwa 12V herunter, wobei dessen Begrenzungsstrom - auf den Primärkreis berechnet - etwas unter dem maximalen Strom einer EIB-Spannungsversorgung liegen sollte. Damit wird vermieden, daß diese nicht im Bit-Kurzschluß mit deren Begrenzung anspricht. Der Spannungswandler 44 weist zusätzlich einen +5V-Ausgang 45 auf.

Da der Spannungswandler 44 eine Stromquelle zur Strombegrenzung bildet, kann die Datenübertragung über das zweite Adernpaar 14b dadurch erfolgen, daß dieser für zu sendende Bit-Informationen jeweils kurzgeschlossen wird. Entsprechend ist die Spannungsversorgung in jedem Installationsgerät 18 bis 24 gepuffert, so daß im Bit-Übertragungsmoment keine Unterbrechung stattfindet. Um die Spannungsversorgung aufrecht zu erhalten, sollte der Datendurchsatz jedoch einen bestimmten Wert nicht überschreiten. Aus diesem Grund sind sehr kurze Datentelegramme vorgesehen, die jedoch die Grundfunktionen vollständig bedienen können. Die Sicherstellung der Spannungsversorgung ist mit sogenannten Sende-Zeitverzügen nach erfolgten Telegrammen zusätzlich optimierbar. Bei einem derartigen Sendeverfahren mit Zeitaufschub bei einer Busbelegung und anschließender Prioritätssteuerung über das Zufallsprinzip und/oder proportional zu dem Digitalwert der eingestellten Adresse ermöglicht eine Speicherung eines Sendesignals im Sensor 18,22 bis zur Busfreigabe.

Der Applikationsanschluß 16 zum Anschluß des zweiten Adernpaares 14b des Buskabels 14 enthält einen Sender 46 und einen Empfänger 48. Der über einen Widerstand 50 und eine Leuchtdiode 52 gegen Masse geschaltete Sender 46 und der Empfänger 48 sind über einen Reset-Schalter 54 mit dem Spannungswandler 44 verbunden. Die Anwenderschnittstelle 32 des Applikationsbausteins 10 ist mit einer galvanischen Trennung 56 versehen, um einen Kurzschluß der EIB-Drossel 34 zu verhindern. Über diese Anwenderschnittstelle 32 ist in der zweiten und dritten Installationsebene der Steuerbaustein 30 mit dem Applikationsbaustein 10 verbunden. Lediglich in der ersten Installationsebene, in der kein Steuerbaustein 30 vorgesehen ist, findet keine Kommunikation an der Anwenderschnittstelle 32 statt, so daß der Sender 46 automatisch hochohmig ist.

FIG 5 zeigt ein Schaltbild der Applikationsankopplung 26, die in jedem Installationsgerät 18 bis 24 vorgesehen ist. Über einen Busanschluß 58 für das zweite Adernpaar 14b werden sowohl Daten als auch die Spannungsversorgung Uᵥ vom Applikationsbaustein 10 geführt. Mittels eines Linearreglers 60 wird die Versorgungsspannung Uᵥ auf eine Spannung Uₚ für einen Mikroprozessor 62 heruntergeregelt. Die Spannung Uₚ sollte um etwa 1V oberhalb von +5V liegen, um einerseits Spannungsabfälle entlang einer Buslinie abzufangen, und um andererseits genügend Energie in einem Pufferkondensator C3 zu speichern. Dadurch wird vermieden, daß auch bei ungünstigen Folgen von Bit-Kurzschlüssen die Spannung Uₚ für den Mikroprozessor 62 zusammenbricht.

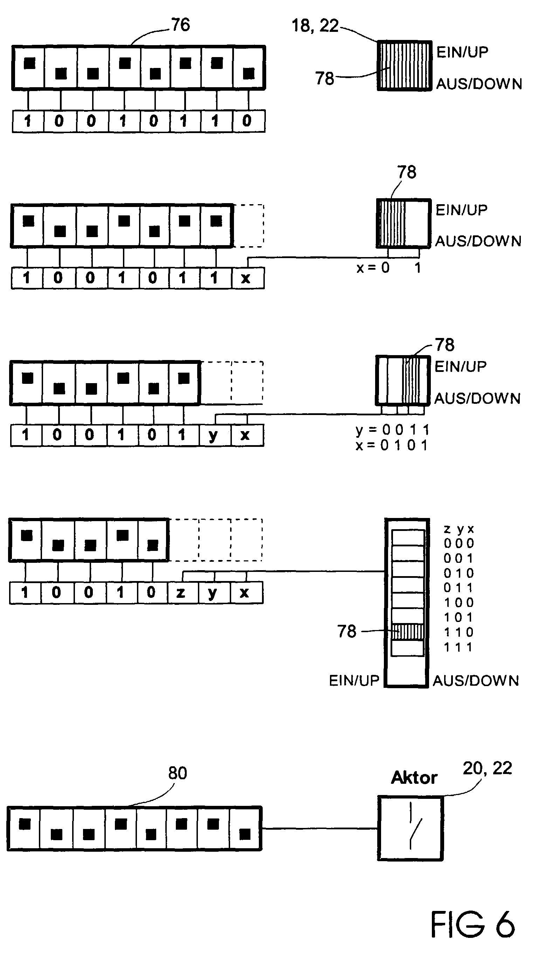

Der Mikroprozessor 62 weist einen Eingang 64 für Signale vom Sensor 18,22 auf. Ein Ausgang 66 des Mikroprozessors 62 dient zum Anschluß an den Aktor 20,22. Zum Umschalten von Mehrfach-Sensoren 18,22 und Mehrfach-Aktoren 20,22 ist ein Anschluß 68 am Mikroprozessor 62 vorgesehen. Ein weiterer Ausgang 70 des Mikroprozessors 62 dient zum Anschluß an einen Adress-Kodierschalter (76 in FIG 6). Ein Empfängereingang 72 des Mikroprozessors 62 ist über einen Widerstand R1 mit dem Linearregler 60 verbunden. Der Empfängereingang 72 führt über einen Transistor T1 und eine Zenerdiode D1 sowie einen Widerstand R4 an den Busanschluß 58. Die Zenerdiode D1 ist anodenseitig über einen Widerstand R2 und kathodenseitig über einen Kondensator C2 gegen Masse geschaltet. Der Transistor T1 bildet zusammen mit der Zenerdiode D1, dem Kondensator C2 sowie den Widerständen R2 und R4 eine Empfangsstufe des Applikationsankopplers 26, wobei die Zenerdiode D1 eine die Eingangsempfindlichkeit bestimmende Triggerschwelle setzt.

Ein Senderausgang 74 des Mikroprozessors 62 ist über ein RC-Glied mit dem Kondensator C1 und dem Widerstand R1 an die Basis eines Transistors T2 angeschlossen, der kollektorseitig mit dem Busanschluß 58 verbunden ist. Ebenso wie der Empfänger-Transistor T1 ist auch der Sende-Transistor T2 emitterseitig gegen Masse geschaltet. Eine anodenseitig gegen Masse geschaltete Diode D2 und ein ebenfalls gegen Masse geschalteter Widerstand R6 sind mit der Basis des Transistors T2 verbunden. Eine anodenseitig gegen Masse geschaltete Zenerdiode D4 ist katodenseitig mit dem Kollektor des Transistors T2 vebunden. Die Zenerdiode D4 sichert den Verpolungsschutz für die aus dem Transistor T2, dem Kondensator C1, den Dioden D2 und D4 sowie den Widerständen R1 und R6 aufgebaute Sendestufe des Applikationsankopplers 26. Dieser schließt bei einer bestimmten Bit-Information während der Bit-Zeit das zweite Adernpaar 14b kurz, wobei dem Kurzschluß die 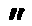 1" oder 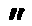 0" zuordenbar ist. Der Kondensator C1 und die Diode D2 verhindern bei einem Außertrittgeraten des Mikroprozessors 62 einen Kurzschluß des zweiten Adernpaares 14b und damit des Installationsbuses 14. Während der Applikationsankoppler 26 beim Sensor 18,22 zur Kollisionserkennung sowohl die Sende- als auch die Empfangsstufe enthält, ist bei dem oder jedem Aktor 20,22 lediglich die Empfangsstufe erforderlich.

Der Mikroprozessor 62 des Applikationsankopplers 26 ist vorzugsweise ein maskenprogrammierbarer Standard-Mikroprozessor, der das Tasten- oder Wippenfeld für den oder jeden Sensor 18,22 und die (nicht dargestellte Endstufe) des oder jedes Aktors 20,22 direkt bedient. Der Mikroprozessor 62 kann die Software für alle bereitgestellten Typen von Installationsgeräten enthalten, so daß lediglich eine einzige Programmiermaske für das gesamte Installationssystem zu erstellen ist.

FIG 6 zeigt an einem Zuordnungsbeispiel die Kodierung eines Kodierschalters 76, mittels dem die Adresse jedes Sensors 18,22 eingestellt wird. Dargestellt ist die Zuordnung für einen Einfach-, einen Zweifach-, einen Vierfach- und einen Achtfach-Sensor 18,22. Als besonders geeignet hat sich ein Binärschalter (Mäuseklavier) mit einer Adresslänge von 1 Byte (256 Adressen) als Kodierschalter 76 herausgestellt.

Die erste Zeile der FIG 6 zeigt die Zuordnung des Kodierschalters 76 zu einem Einfach-Sensor 18,22 mit einer einzelnen Wippe 78 für eine Schalter-Funktion (EIN/AUS) und/oder für eine Dimmer-Funktion (UP/DOWN). Die zweite Zeile zeigt die Zuordnung des Kodierschalters 76 zu einem ZweifachSensor 18,22 mit zwei Wippen, denen die im Kodierschalter mit x bezeichnete Adresse 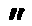 0" bzw. 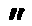 1" zugeordnet ist. Analog sind bei einem Vierfach-Sensor 18,22 gemäß der dritten Zeile den vier Wippen die letzten beiden Adressen y und x des Kodierschalters 76 zugeordnet. Dabei ist den Wippenhälften der vier Wippen des Sensors 18,22 der dargestellte Binärcode (x = 0 und y = 0, x = 1 und y = 0, x = 0 und y = 1 bzw. x = 1 und y = 1) zugeordnet.

Analog sind den Wippenhälften eines Achtfach-Sensor 18,22 drei Adressen x,y,z des Kodierschalters 76 mit den dargestellten Binärcodes zugeordnet. Man erkennt, daß der jeweils schraffierten Wippe 78 in den vier Zeilen der FIG 6 jeweils der in der ersten Zeile unterhalb des Kodierschalters 76 aufgeführte Binärcode zugeordnet ist. Wie in der fünften Zeile der FIG 6 angedeutet, ist dieser Binärcode dem Aktor 20 mit Schalterstellung "AUS" zugeordnet. Die dargestellte Stellung des Aktorschalters entspricht der direkten Zuordnung in der ersten Installationsebene. Daher ist jeder Aktor 20,22 mit einem Achtfach-Kodierschalter 80 ausgerüstet. In jedem Aktor 20,22 kann auch ein serieller nicht flüchtiger Speicher (EEPROM) zur Aufnahme der zugeordneten Adresse vorgesehen sein.

## Patentansprüche

1. Installationssystem mit einem Installationsbus (1) mit einem ersten Adernpaar (14a) und mit einem zweiten Adernpaar (14b) sowie mit einem Applikationsbaustein (10), der einen Kontaktanschluß (12) zur Spannungsversorgung und eine Anwenderschnittstelle (32) sowie einen Applikationsanschluß (16) für das zweite Adernpaar (14b) aufweist, an das eine Anzahl von Installationsgeräten (18 bis 24) über jeweils einen Applikationsankoppler (26) anschließbar ist.

2. Installationssystem nach Anspruch 1, mit einem einen programmierbaren Prozessor (MP) und einen nicht-flüchtigen Speicher (EEPROM) aufweisenden Steuerbaustein (30), der an den Applikationsbaustein (10) anschließbar ist.

3. Installationssystem nach Anspruch 2, mit einem Busverbinder (38) vom ersten Adernpaar (14a) zum zweiten Adernpaar (14b).

4. Installationssystem nach einem der Ansprüche 1 bis 3, wobei der Applikationsbaustein (10) einen Spannungswandler (44) in Stromquellenschaltung und eine vorzugsweise galvanische Trenneinrichtung (56) zwischen der Anwenderschnittstelle (32) und dem Applikationsanschluß (16) umfaßt.

5. Installationssystem nach einem der Ansprüche 1 bis 4, wobei der Applikationsbaustein (10) einen Sender (46) und einen Empfänger (48) umfaßt.

6. Installationssystem nach einem der Ansprüche 1 bis 5, wobei der oder jeder Applikationsankoppler (26) einen Mikroprozessor (62) und zusätzlich zu einer Empfangsstufe (T1) eine Sendestufe (T2) umfaßt.

7. Installationssystem nach einem der Ansprüche 1 bis 6, wobei der Applikationsankoppler (26) einen Linearregler (60) zur Spannungsreglung aufweist.

8. Installationssystem nach einem der Ansprüche 1 bis 7, wobei mindestens ein Sensor (18,22) und mindestens ein Aktor (20,22) als Installationsgeräte vorgesehen sind.

9. Installationssystem nach einem der Ansprüche 1 bis 8, wobei als Installationsgerät mindestens ein mittels Infrarot oder Funk ansteuerbarer Fernsteuer-Dekoder (24) vorgesehen ist.
